# EUROPEAN PATENT SPECIFICATION

(11) **EP 1 494 525 B1**
(45) Date of publication and mention of the grant of the patent: **03.10.2007**
(21) Application number: 03715001.8
(22) Date of filing: 14.04.2003
(51) Int. Cl.: A01K 63/04, B01D 33/06, B01D 33/58, C02F 1/24

(54) **METHOD FOR THE PURIFICATION OF WASTEWATER IN FISH FARMING**
VERFAHREN ZUR REINIGUNG VON ABWASSER BEI DER FISCHZUCHT
PROCEDE D'EPURATION DES EAUX USEES DE PISCICULTURE

(30) Priority: 15.04.2002 FI 20020722
(43) Date of publication of application: 12.01.2005
(73) Proprietor: Janatuinen, Jorma, 00980 Helsinki (FI)
(72) Inventor: Janatuinen, Jorma, 00980 Helsinki (FI)
(74) Representative: Järveläinen, Pertti Tauno Juhani
(86) International application number: PCT/FI2003/000283
(87) International publication number: WO 2003/086066

(56) References cited:
- WO-A2-02/28786
- FR-A1- 2 746 031
- GB-A- 2 213 811
- GB-A- 2 371 244
- JP-A- 56 152 780

## Description

The present invention relates to a method as defined in the claims for the purification of fish farming wastewater.

Fish farming wastewater comprises all water used in fish farming. The waste contained in the fish farming wastewater and discharged into the receiving watercourse includes: (1) fecal secretions (faeces and urine) of fish, (2) unused feed, (3) chemicals and medicaments used for the treatment and prevention of diseases and (4) pathogenic bacteria and parasites. The fecal secretions (faeces and urine) of fish and the unused feed form the largest waste category as they are associated with the normal activities of the fish farm. Some of them are discharged in a form dissolved in wastewater and some in a form combined with solid matter. The solid wet waste formed on the bottom of fish ponds, raceways or tanks is called sludge.

The nutrients, especially phosphorus and nitrogen compounds delivered from a fish farm into the water system make the receiving watercourse eutrophic and may cause a complicated series of biological, chemical and physical interactions that has an effect on the ecological condition of the entire water system. In inland water areas, the minimum factor is in most cases phosphorus (P) while in marine areas it is nitrogen (N). The load of fish farming wastewater in the receiving water system depends on the extent of production, the farming methods, the feed used, the physical, chemical and biological characteristics of the receiving watercourse and especially the method used for sewage water purification.

Three main categories of extraneous matter in fish farming wastewater can be distinguished: oils and greases, dissolved matter and solid matter. The solid matter in sewage water is further divided into three categories, i.e. depositing solids, floating solids and suspended solids.

In regard of fish farming effluents, the most important kinds of waste in wastewater are depositing solids, floating solids and suspended solids, which can be recovered by an efficient purification method, and dissolved substances. There are three water quality properties that the purification of fish farming wastewater is mainly intended to influence: (1) reduction of phosphorus concentration, (2) reduction of nitrogen content and (3) reduction of biological oxygen consumption.

Attention is mainly given to the phosphorus content of the solid matter in wastewater and to the behavior of phosphorus, because phosphorus is in most cases considered to be a minimum factor in respect of eutrophicity of watercourses. In the reduction of effluent loadings, the removal of solids is of central importance because, depending on its freshness, the sludge contains a considerable proportion of the nutrients (phosphor, nitrogen) produced in fish farming activities. However, the nutrients remain in the sludge for a relatively short time. Fresh faeces and unused feed are deposited fairly quickly onto the bottom of the fish ponds, raceways and tanks. In the fish pond, however, solid matter soon begins to decay by the action of algae and bacteria. As a consequence of the decay, some of the nutrients are dissolved in the water. Fast dissolution of nutrients starts within 2-3 weeks from the formation of the solid matter (sludge). The removal of nutrients dissolved in wastewater has so far been economically unprofitable because of the low nutrient content. Therefore, attention has been focused on fast and efficient recovery of solid matter. If the sludge produced can be recovered soon enough, there will occur but little dissolution of nutrients.

However, fish farming wastewater has a certain property that distinguishes it from other sorts of wastewater and makes purification of fish farming wastewater very difficult. It is characteristic of fish farming wastewater that the volume of wastewater per unit time (1/s) is high but the concentrations (µg/l) are low. However, because of the large volume flow, a large flow of material occurs. At large rainbow trout production plants, water consumption amounts to 2000 - 3000 l/s or even more. As the material concentrations are very low, the large amount of wastewater and the low material concentrations impose very strict requirements on the wastewater purification method.

A commonly used wastewater purification method in fish farming is sedimentation (clarification).

The most typical fish farming pond is an elongated earth or concrete pond or raceway. The flow rates in the ponds or raceways are often so low that most of the sludge produced is deposited on the bottom of the fish pond and is not carried away. Thus, traditional fish ponds and raceways function themselves as a kind of sedimentation basin. However, their efficiency in regard of phosphorus removal is quite low.

There are also sedimentation basins built next to fish ponds and raceways, designed to remove sludge from the wastewater. Different sedimentation basin types are horizontal-deposition sedimentation basins, vertical-deposition sedimentation basins and enhanced-deposition sedimentation basins.

However, in horizontal-deposition and vertical-deposition sedimentation basins, the purification efficiency regarding lost phosphorus generally remains below 10 %. The commonest reason for the poor purification result obtained in the sedimentation basin is that the solids have already settled in fish ponds and raceways.

Besides the basic types of sedimentation basins, i.e. horizontal-deposition and vertical-deposition sedimentation basins, enhanced-deposition sedimentation basins have been developed. The swirl concentrator pertains to enhanced sedimentation methods. The swirl concentrator has been developed from the vortex separator. The swirl concentrator refers to a device in which the water to be treated is supplied into a basin of circular horizontal cross-section in a tangential direction and removed either through a central pipe or over the edges. The area required by a swirl concentrator is only about 5 % of the area of a traditional sedimentation basin.

It has been proved that an important factor affecting the operation of the swirl concentrator is resuspension of solid matter already deposited, which is decisively influenced by the great vortices produced in the flow. For the operation of the swirl concentrator, it is necessary to limit these vortices. As a practical solution, it is recommended that the swirl concentrator be provided with four pairs of rods mounted on its circumference to prevent the formation of great vortices.

Swirl concentrators can be divided into two categories: center-discharge and edge-discharge type swirl concentrators.

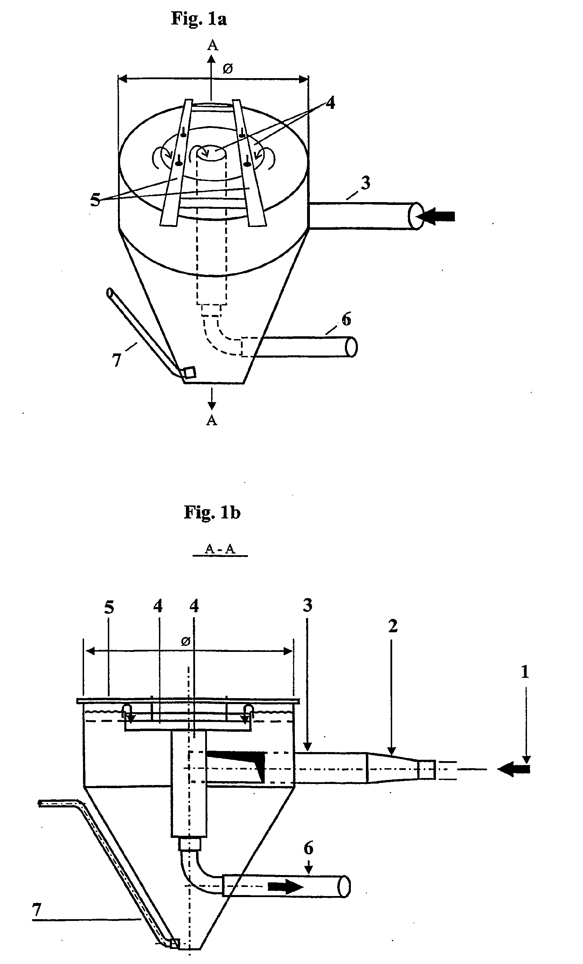

The center-discharge swirl concentrator (Fig. 1a and 1b), which comprises an expansion 2 in a supply pipe 3 for incoming wastewater 1, a central discharge system 4, two supporters 5 of the central discharge system, a discharge pipe 6 and a sludge discharge 7, is characterized in that the water is removed from the device over a central, usually ring-like overflow edge. The water is passed out of the basin through a separate discharge pipe. The discharge pipe is usually in an upright position at the center of the basin, but it may also be mounted in an oblique or horizontal position.

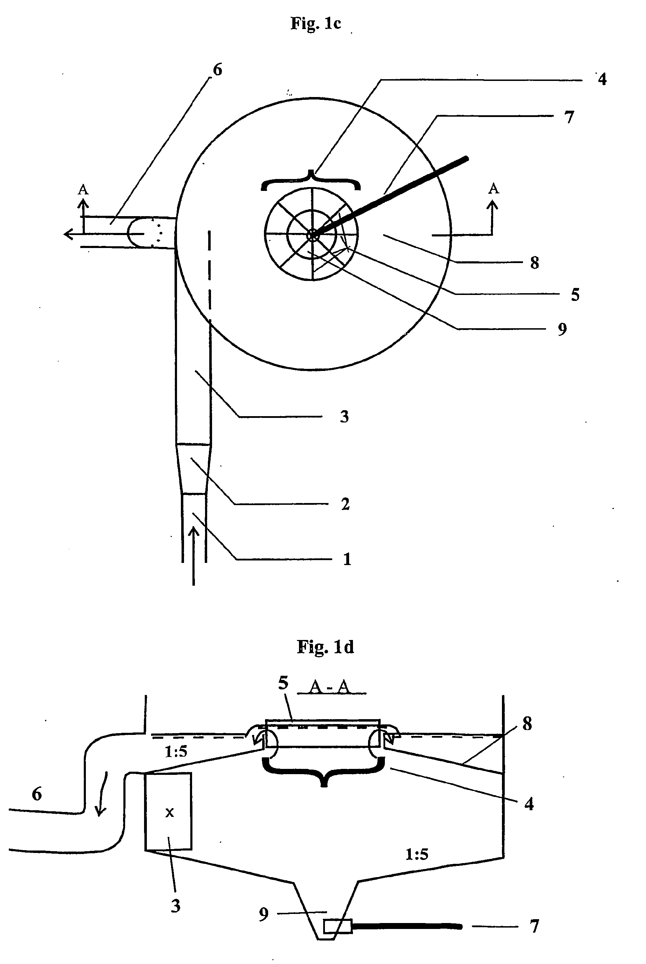

In edge-discharge swirl concentrator (Fig. 1c and 1d), which have an expansion 2 in a supply pipe 3 for incoming wastewater 1, an edge-discharge system port 4, four anti-vortex bars 5, a discharge pipe 6, a sludge discharge 7, a cover 8 and a sludge trap 9, water is removed over the edges of the basin, and thus no separate discharge pipe is needed. Since edge-discharge swirl concentrator do not in themselves comprise a separate discharge pipe, the sludge trap can be disposed centrally and shaped in a hydraulically optimal manner. As compared with the center-discharge swirl concentrator, the structure is simpler expressly due to the discharge arrangement used.

According to a research, of the methods based on sedimentation the swirl concentrator is the most useful, although the efficiency of separation of different substances of solid matter in fish farming wastewater fluctuate considerably and has so far been 5-90 %. The swirl concentrator makes it possible to use large amounts of water and to reduce the solid matter concentrations at a reasonable cost. For the use of a swirl concentrator it is necessary that the fish tanks are so-called self-cleaning tanks.

At fish farms having self-cleaning tanks, the swirl concentrator has proved to be effective if the sludge and solid matter to be separated is fresh (undecayed) and therefore apt to be readily deposited. The purification efficiency of the swirl concentrator in the removal of phosphorus from fish farming wastewater has varied between 10 - 40%.

Of the phosphorus contained in the wastewater, some is in the form of dissolved phosphate phosphor, which cannot be recovered by the swirl concentrator; instead, for its recovery it would be necessary to use chemical precipitation. The rest of the total phosphorus content of the wastewater is combined with solid matter, which is suspended in the wastewater or is otherwise not capable of being recovered (floating solids) by a swirl concentrator. Therefore, a portion of the total phosphorus content of the wastewater can not be recovered by the swirl concentrator; instead, it is emitted into the water system unless other purification methods are used.

D1: JP 56 152 780 A (Device for waste water treatment).: The purification in D1 consists of flotation and drum screen and is mainly meant for purification of wastewater of residential and industrial wastewater, wherein the wastewater is first conducted to flotation and after that the sludge is gathered to a separate reservoir and therefrom the wastewater is pumped for drying. From the flotation the wastewater is conducted as overflow to the reservoir having a drum screen.

D2: WO 02 28786 A2 (Process and Apparatus for Treating Wastewater): In D2 the waste water purification unit consists of a vortex separator, from which a swirl concentrator is further developed, a flotation unit, a biological filter as well as a membrane filter.

D3: GB- A-2 213 811 (Purification of water for ponds or tanks containing fish). The purification unit in D3 consists of a vortex-separator with a biological and physical filter. Bigger waste water particles fall on the bottom of the vortex separator, and they are removed therefrom by pumping, either continuously or periodically. The waste water that comes into the surface is purified with a biological and physical filter. The purified water that has passed the filters is pumped back to the fish ponds. The solid matter in the filters is pumped away.

D4: GB-A-2 371 244 (A water purification system): A water purification method and system comprises a first chamber operating as a vortex concentrator for receiving water to be purified, a screen filter through which water is drawn from the first chamber 3 and which supplies filtered water to a biological filtration system contained in at least one separate chamber, a return passage which returns water to a pond and a pump to generate water circulation within the system. Part of the first chamber is a sump for collecting particulate material and the screen filter is provided with a backwash device which dislodges particulates from the screen by means of a reverse fluid flow through the screen. The water purification system may be used as part of a gravity flow or pumped filtration system.

The object of the invention is to develop a new method for the purification of fish farming wastewater that will allow a phosphorus purification efficiency of over 70% as calculated from the phosphorus contained in the fish feed used. Included in this figure is also the phosphorus incorporated into the fish. At the best, the solids purification efficiency is over 100 % as calculated from the solid matter concentrations in the incoming and outgoing wastewater. This object can be achieved according to the invention by using a drum screen - flotation purification method. In a preferred embodiment, it is possible to use a swirl concentrator - drum screen - flotation purification method.

In more accurate terms, the method of the invention for the purification of fish farming wastewater is characterized by what is presented in the claims.

In the following, the invention will be described in detail by referring to investigation results obtained with the purification method in question and to the attached drawings, which present a diagram of the purification method and the purification sub-units and their purification efficiency, and in which drawings:
**Figures** 1a and 1b represent a center-discharge swirl concentrator,
**Figures** 1c and 1d represent an edge-discharge swirl concentrator,
**Figure** 2 presents a diagrammatic illustration of the swirl concentrator - drum screen - flotation purification method,

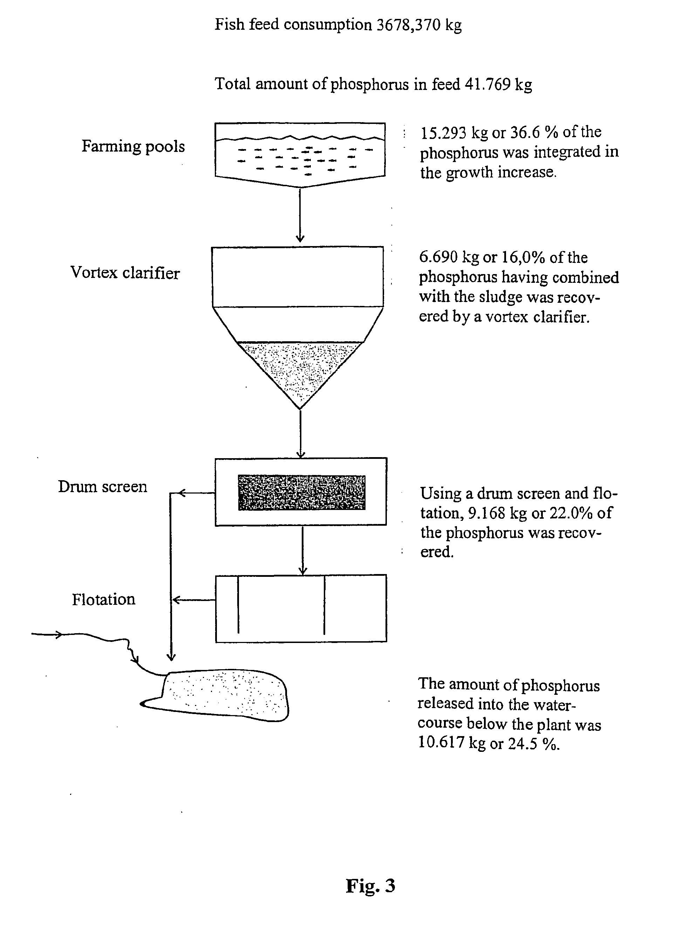

**Figure** 3 presents a diagram of the results of an investigation carried out using the swirl concentrator - drum screen - flotation purification method concerning the purification efficiency for total phosphorus removal by purification sub-units, showing also the emissions into waterways as calculated from the total amount of phosphorus in the dry feed used,
**Figures** 4a and 4b present a rotary drum screen,
**Figure** 5a 5b and 5c illustrate flotation, and
**Figure** 6 presents a flotation flow diagram.

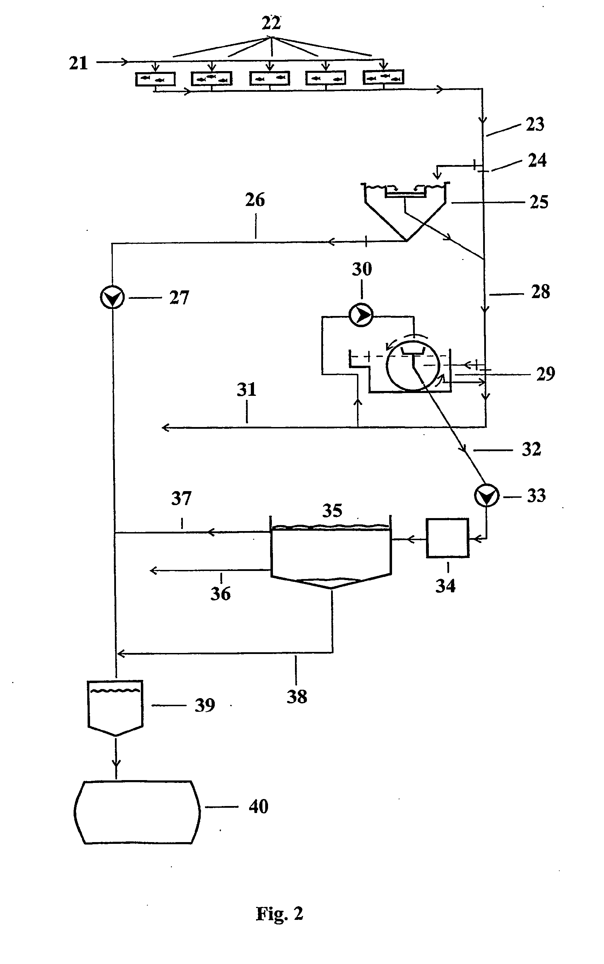

The swirl concentrator - drum screen - flotation method of purifying fish farming wastewater consists, as its name suggests, of three purification sub-units. Fig. 2 presents a diagrammatic illustration of the purification system. The water 21 supplied to fish farm is passed into fish tanks 22. The fish farming wastewater 23 is first passed via check valves 24 into a swirl concentrator 25, where the separation of rough solid matter occurs. If necessary, the swirl concentrator can also be passed by and the fish farming wastewater can be conducted via the check valves 24 directly into a drum screen. The aim is to recover the heaviest particles in the fish farming wastewater, which are more apt to settle, as well as possible by means of the swirl concentrator. The purification efficiency of the swirl concentrator regarding the total phosphorus content is about 10 - 20 % as calculated from the phosphorus contained in the feed and about 40-50 % when the phosphorus incorporated into the fish is taken into account.

The wastewater 28 passed through the swirl concentrator is then taken into a drum screen 29, where the final purification of the wastewater takes place. The drum screen has a dual function in the purification system. First, the drum screen is used to recover the solid matter (sludge) that is not deposited in the swirl concentrator but would increase the discharge into the watercourse. Another function of the drum screen is to get the sludge concentrated in an amount of water small enough to make it economically possible to clarify the wastewater by flotation to remove the sludge. The amount of flushing water needed for the drum screen in the case of continuous flushing is about 2 % of the amount of water used, which it is still economical to clarify by flotation. The solid matter 32 retained in the drum screen (concentrated wastewater fraction, about 2 % of the amount of process water) is passed into a flotation stage 35, where the wastewater is cleaned of solid matter remaining in the concentrated wastewater.

A specific innovation in the method for the purification of fish farming wastewater: swirl concentrator-drum screen-flotation comprises a drum screen and flotation as purification sub-units, which have never before been used in the described manner as a method of purifying wastewater. The drum screen makes it possible to concentrate fish farming wastewater in an amount of water small enough to allow the concentrated wastewater fraction (with sludge) to be purified by flotation. When the wastewater fraction purified by flotation is passed into a drum screen, all wastewater discharged from the fish farm to a watercourse below it will have passed through the drum screen. Via the sieve mesh size of the drum screen, it is further possible to influence the impurity load caused by the fish farming wastewater. The sieve mesh size of the drum screen is determined according to the purification efficiency to be achieved. When the drum screen with a sieve mesh size of 40 µm is used, the purification method yields a purification efficiency of over 70 % as calculated from the amount of phosphorus in the fish feed used. This figure also includes the phosphorus incorporated into the fish. If necessary, it is possible to use two consecutive drum screens, in which case the latter screen may have a sieve mesh size of 5-10 µm, which will further improve the efficiency of phosphorus removal of the purification system. Although the wastewater can be effectively purified by using a drum screen, a separate purification unit is still required for the treatment of the sludge water recovered by the drum screen. As the sludge recovered by the drum screen has not been deposited in the swirl concentrator, it is not sensible to use a purification technique based on traditional sedimentation. The most efficient method of recovering the sludge is flotation.

The filtered wastewater having passed through the drum screen (main water fraction) 31 is discharged e.g. into a receiving watercourse. The solid matter retained in the drum screen (concentrated wastewater fraction) 32 is taken into the flotation stage 35, where the concentrated wastewater is cleaned of the solid matter remaining in it. The drum screen is kept clean by continuous flushing (flushing water pump) 30. As stated above, the function of flotation is to recover the solid matter from the concentrated wastewater of the drum screen as effectively as possible.

The screens are usually of drum-like construction, in which case the sieve surfaces are attached to the surface of the drum, or of band-like construction. In either case, the operating principle is the same.

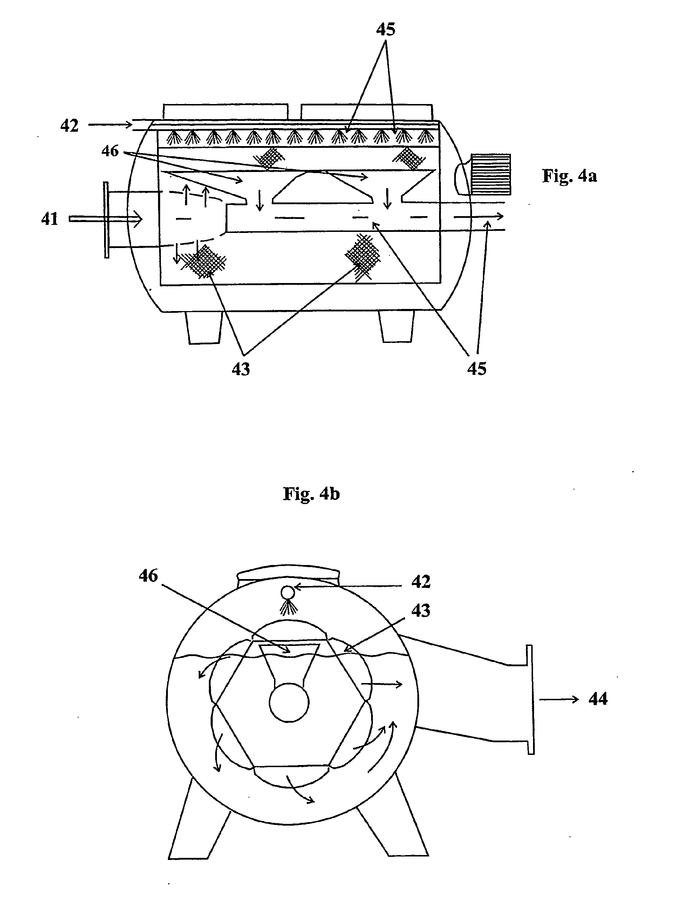

The drum screen (figures 4a and 4b) is a cylinder rotating about a horizontal axis and partially immersed in water, the cylinder envelope functioning as a sieve. The direction of water flow may be either inwards or outwards from the cylinder. The sieve is flushed by pressurized water in the upper part of the device either continuously or periodically 45 according to pressure drop control (drum screen flushing water, about 2 % of the wastewater entering the drum screen). There are many brands of drum screen on the market, mainly differing from each other in respect of sieve material and flushing system details.

Usually the sieve consists of a metallic or nylon fabric attached to a rigid supporting structure. Depending on the obj ective, the mesh size of the fabric can be chosen within fairly wide limits. For example, if the aim is to remove the natural plankton algal growth from the water, then in it is necessary to use very fine fabrics having a mesh size of the order of 0.005 mm. In this case the process is called microscreening. The solid matter formed on the surface of the finest sieve fabrics forms in itself a screening layer, which further improves the separating capacity of the sieve, in other words, even particles smaller than the free sieve aperture stop on this layer.

On the basis of their operation and structure, the screens usable for the treatment of raw water or wastewater can be divided into different categories as follows: stationary screens, rotary drum screens, rotary disc screens, traveling band screens, vibratory screens and triangular screens.

In this context, we shall only deal with the drum screen because in investigations regarding the performance of the purification method it has proved to be a workable and efficient solution.

In the drum screen (figures 4a and 4b) the wastewater is screened through the perforated screening surface 43 (sieves attached to the cages of the drum screen, sieve mesh size 40 - 100 µm depending on the purification efficiency), the largest particles being thus separated. The untreated raw water or wastewater can be supplied either inside or outside of the drum according to screen type. The sieve surface consists of a net composed of wires, i.e. a wire sieve. Rotary drum screens can be further sorted as drum screens (screened waste accumulated inside the drum), drum screens (screened waste accumulated on the outer surface of the drum), rainwater screens and other drum screens.

Screens can further be divided into two groups according to sieve mesh size:
- ordinary screens, mesh size over 0.1 mm
- micrsoscreens, mesh size below 0.1 mm.

The term 'microscreening' is generally used when the apertures in the screening surface have a diameter of 0.005 - 0.1 mm. Microscreens were developed for separating algae, clay sand and sand from water before sand filtering. When microscreening is used before sand filtering, it is possible to double the filtering speed while increasing the flushing intervals. Microfilters have also been used as the only water purification method. The microfilter has very small apertures, so the filter is apt to get clogged. Therefore, microfilters have generally been used only for fairly clean water. Microfilters clean the water of solid matter, such as sand, clay sand and algae, but they do not improve the water chemically, in other words, they do not remove dissolved substances, humus, color, ammonia nor generally bacteria, either. However, the mesh size of the wire sieve can be selected according to need. If the raw water is to be cleaned of e.g. plankton algae, then the wire screen must have a mesh size of 5 - 60 µm. If bacteria are to be removed, then the wire screen must have a mesh size below 10 µm. The apertures of the microfilter have a size of the same order as in sand filtering.

With a rotary drum screen, the great purification efficiency is achieved in a small space. The largest drum screens have a diameter of 4000 mm and a length of up to 9000 mm. The level of the water surface can be adjusted and it has an influence on the area of the filters used in the purification. For example, the filter of a drum screen having a diameter of 3000 mm and a length of a 3000 mm has an area of 28 m², of which 25 m² is covered with filter cloth. When 75 % of the filter cloth is under water, an area of 19 m² can be used for filtering. When the filtering rate is 75 m/h, the amount of water filtered is about 1500 m³/h, i.e. 420 l/s. The area of a corresponding sand filter would be 7 500 - 15 000 m² with a sand filter and 150 - 250 m² with a pressure filter. As compared with rapid filters (e.g. sand filters), microfilters take up less space, are cheaper and consume less energy.

When a drum screen is used for the purification of fish farming wastewater, 22 - 31 % of the total phosphorus and over 100 % of the solid matter can be recovered. For the total phosphorus, the results have been calculated from the phosphorus in the feed used, and for the solid matter, from the solid matter concentrations in the incoming and outgoing water flows. The concentrated wastewater fraction (about 2 % of the amount of process water) 45 is passed into a flotation stage to be purified further. More accurately expressed, the above-mentioned 22 - 31 % purification efficiency of the drum screen for total phosphorus comprises the total amount of phosphorus recovered from the wastewater by drum screening and flotation. As for solid matter, in an optimal case, the solid matter content of the wastewater delivered from the drum screen into the watercourse is lower than that of the water supplied to the fish farm.

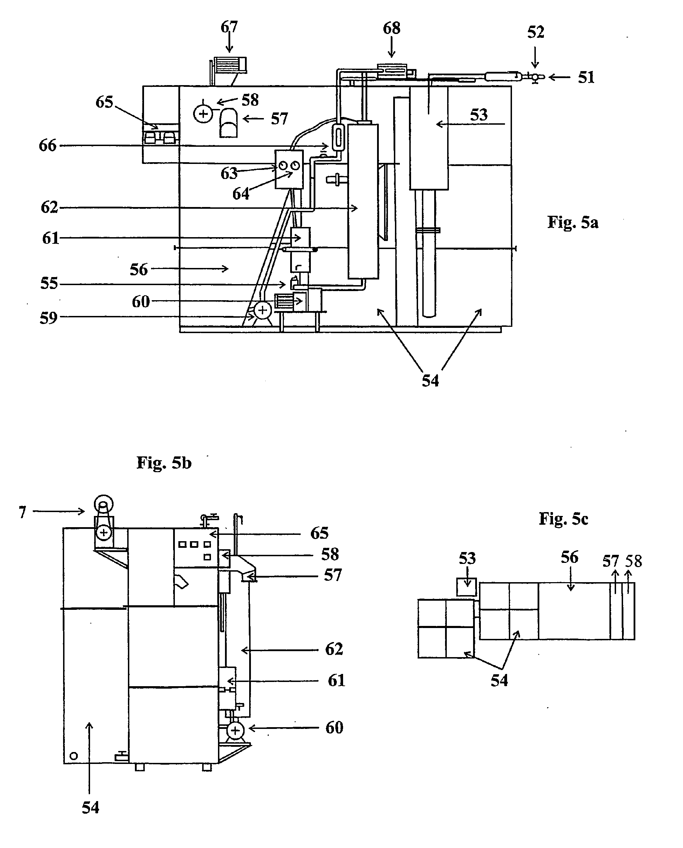

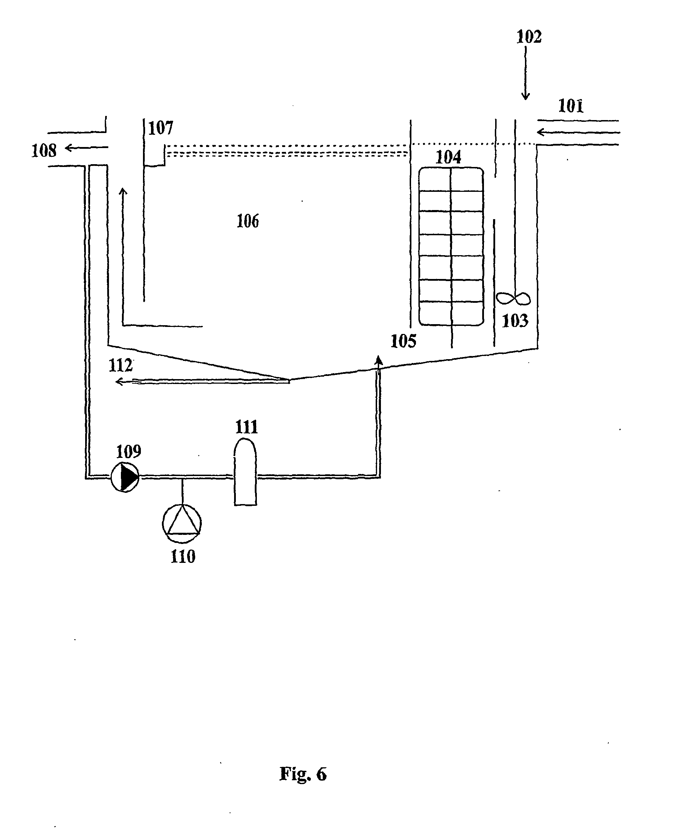

In flotation (figures 5a, 5b, 5c and figure 6), the respective system comprising chemical supply 52 into the incoming water 51, fast mixing 53, flocculating basins with mixers 54, a dispersion nozzle 55, flotation clarification 56, sludge removal 57, outgoing water 58, a dispersion water pump 59, an air compressor 60, a pneumatic pressure tank 61, a dispersion preparation container 62, a pressure meter 63, a flow indicator 64, an electric center 65, a rotameter 66, an electric motor 67 driving a skimmer mechanism and an electric motor 68 driving the mixers, and in the flow diagram an inlet pipe 101 for drum screen flushing water (concentrated wastewater fraction), a chemical supply (e.g. aluminum sulfate and sodium hydroxide) 102, rapid mixing 103, flocculating basins with mixers 104, dispersion nozzles 105, a flotation clarification tank 106, a sludge removal chute 107, a outlet pipe 108 for purified wastewater, a dispersion pump 109, an air compressor 110, a pressure tank 111 and a pipe 112 for removal of sludge deposited on the bottom of the flotation tank, solid particles are separated from the liquid by means of gas bubbles produced in the liquid. The most typical flotation method in water supply engineering is the so-called dissolved-air flotation, whereby flocs produced by coagulation and flocculation area lifted to the water surface by fine air bubbles. The system is based on feeding into the flotation tank, together with the water to be treated, so-called dispersion water, in which air has been dissolved under pressure. This pressure-aerated water quantity is conveyed through special nozzles into the water to be purified, whereupon the pressure suddenly falls and the air is released from the water, forming very small bubbles. The rising air bubbles adhere to particles, flocs, to be removed from the water, with the result that the mass becomes lighter than water and rises to the water surface. The sludge accumulated on the water surface is removed into sludge chutes either by means of skimmer mechanism or via overflow by periodically raising the water level in the tank by damming. The sludge settling to the bottom of the flotation tank is removed e.g. by pumping through the sludge removal pipe.

According to the technique of producing air bubbles, flotation methods can be classified as follows: mechanical flotation, vacuum flotation, dispersed-air flotation, dissolved-air flotation, electrolytic flotation, biological flotation and chemical flotation.

The commonest flotation method is probably the dissolved-air flotation method. In dissolved-air flotation, air is dissolved into water under pressure by injecting, and this air is released in the form of air bubbles when the water is restored to normal air pressure. The air bubbles produced are very small, often having a diameter even below 0.1 mm.

Dissolved-air flotation can be implemented as a full-saturation method or as a partial-saturation method. In the Nordic countries, the partial-saturation method has been used almost exclusively by obtaining the water to be pressure-saturated, i.e. the dispersion water from the treated water. Figures 5a, 5b and 5c illustrate dissolved-air flotation and figure 6 a flow diagram of flotation.

In the swirl concentrator- drum screen - flotation purification method, the concentrated wastewater fraction containing solid matter 32 recovered by the drum screen is passed via a flushing water pumping station 33 into a flotation stage 35, where the solid matter is lifted to the surface of the clarifier. Before the wastewater is fed into the flotation clarification tanks, aluminum sulfate and sodium hydroxide 34 are introduced into it. The sludge 37 accumulated on the water surface in the flotation tank 35 is removed into a lime stabilization tank 39 and from there further into a sludge tank 40 or directly into a sludge tank, using either skimmer mechanism or via overflow by periodically raising the water surface in the tank by damming. However, not all of the solid matter entering the flotation stage rises to the flotation surface, but heavier solid matter is deposited to the flotation bed 38, from where it is generally removed by pumping into a lime stabilization tank 39 and further into a sludge tank 40 or directly into a sludge tank.

There are numerous alternatives for further treatment of the sludge. The sludge can be conveyed e.g. to municipal sludge drying beds, or it can be taken to a dumping area or used as soil improvement material. The wastewater fraction 36 purified by flotation is passed to a watercourse below the fish farm or into a drum screen, in which case the wastewater purified by flotation is removed via the drum screen into a water body below and particles larger than the drum screen mesh size that may still remain in the wastewater are passed again into the flotation purification stage. Thus, all solid matter that is not passed through the sieve of the drum screen is recovered by flotation. Therefore, the mesh size of the drum screen is of decisive importance regarding the purification efficiency of the purification system, as explained above.

According to investigations, by using the swirl concentrator- drum screen - flotation purification method, a purification efficiency of 70 - 80 % of the total phosphorus as calculated from the phosphorus in the fish feed used is achieved. The figure includes the phosphorus integrated into the fish. To allow the above-mentioned purification efficiency to be achieved, the fish tanks have to be of self-cleaning type.

Within the scope of the invention, solutions differing from the above-described are also feasible. Thus, the swirl concentrator 25 may be disposed after the drum screen 29. In this case, the fish farming wastewater is first taken to the drum screen, from where the filtered wastewater fraction 31 is conveyed away e.g. to a receiving watercourse. The drum screen flushing water, i.e. the concentrated wastewater fraction (about 2 % of the amount of process water) 32 is passed into the swirl concentrator. The sludge recovered by the swirl concentrator is passed into a sludge tank via lime clarification or directly. From the swirl concentrator, the concentrated wastewater fraction (about 2 % of the amount of process water) 32 is passed further into the flotation stage 35 for purification. This solution provides the advantage of allowing the swirl concentrator to be designed to smaller dimensions, thus also permitting the surface load values of the swirl concentrator to be reduced and its solids purification efficiency to be improved. This also reduces the construction costs. Still, the phosphorus removal efficiency of the purification system remains unchanged.

In the swirl concentrator - drum screen - flotation purification method, a swirl concentrator can only be used if the fish tanks are so-called self-cleaning tanks. The self-cleaning property of the fish tanks is an absolute requirement for the use of a swirl concentrator. The swirl concentrator is not very well applicable as a method of wastewater purification in conventional elongated earth or concrete fish ponds and raceways because the heavier sludge particles are already deposited in the ponds and raceways whereas the lighter sludge particles are not deposited in the swirl concentrator, as explained above. In fish farms having no self-cleaning fish tanks or where most of the sludge is deposited in the fish ponds, it is preferable to use a drum screen and flotation as the purification method, which involves lower investment costs. In the drum screen - flotation purification method, the fish farming wastewater is passed directly into the drum screen and the filtered waste (concentrated wastewater fraction) from the drum screen is passed to the flotation stage. The operating principle of this purification method is otherwise similar to that of the swirl concentrator - drum screen - flotation purification method. Only the swirl concentrator has been omitted as an unnecessary part involving additional costs. The drum screen - flotation purification method can also be better used as a cheaper solution for recovery of the sludge produced in net bag farming. In this case the net bags have to be provided with sludge collecting means placed below them, from where the sludge is pumped or drawn by negative pressure into the drum screen. The sludge collecting means may consist of e.g. sludge collecting cones or funnels made from structural plastic fabric or some other suitable material and placed below the net bags.

## Claims

1. Method for the purification of wastewater produced in fish farming, wherein the purification method comprises at least two sub-stages of purification: screen purification and flotation stages,
**characterized in that**:
- the wastewater produced in fish farming is conveyed to the screen purification stage, which comprises one or more screens (43) to which the wastewater is passed, from where the filtered wastewater fraction (main water fraction) (31) and (44) is conveyed away e.g. into a receiving watercourse and where a substantial proportion of the solid matter (sludge) that has not been deposited in the fish tanks and sedimentation pools is recovered by means of the screen, and where a concentration of solid matter (concentrated wastewater fraction) (45) is achieved by screen purification,
- the solid matter (concentrated wastewater fraction) (45) caught on the screen is passed to the flotation stage, where solid particles are separated from the wastewater by means of gas bubbles and chemicals introduced into the liquid, and where the concentrated wastewater is cleaned of solid matter remaining in it.

2. Purification method according to claim 1 for the purification of wastewater produced in fish farming,
**characterized in that**, besides flotation, the purification method comprises two additional sub-stages of purification:
- a swirl concentrator purification stage, comprising one or more swirl concentrators (25) by means of which the wastewater produced in fish farming is purified by sedimenting (clarifying), by conducting the wastewater into a basin of circular horizontal cross-section in a tangential direction and removing it through a central pipe and over the edges, wherein the rougher solid matter gathers into a central sludge pit and is removed from there either in a continuous flow or periodically,
- a screen purification stage, to which the wastewater coming from the swirl concentrator purification stage is conveyed and which comprises one or more screens (43) to which the wastewater is conveyed, from where the filtered wastewater fraction (main water fraction) (44) is conveyed away e.g. into a receiving watercourse and where the solid matter (sludge) not deposited in the swirl concentrator is recovered by means of the screen, and where a concentration of sludge (concentrated wastewater fraction) (45) is achieved by means of a drum screen, or
- the swirl concentrator stage (25) is disposed after the screen (29), in which case the fish farming wastewater (23) is conveyed first to the screen (29), from where the filtered wastewater (main water fraction) (31) is conveyed away e.g. to a receiving watercourse, and where the screen flushing water, i.e. concentrated wastewater fraction (32) is conveyed to the swirl concentrator (25).

3. Method according to claim 1 for the purification of fish farming wastewater, **characterized in that** the fish farming wastewater (23) is first conveyed into a swirl concentrator (25), said swirl concentrator belonging to one of two categories: center-discharge type, in which center-discharge type swirl concentrators the wastewater is removed from the concentrator over a generally ring-like central overflow edge (4), and in which the fish farming wastewater is conveyed of the swirl concentrator through a separate discharge pipe (6), and edge-discharge type swirl concentrators, in which edge-discharge type swirl concentrators the fish farming wastewater is removed over the edges (4) of the basin into a discharge pipe (6), and that the solid matter in the fish farming wastewater deposited in the swirl concentrator is removed through a sludge discharge pipe (7) starting from the bottom of the swirl concentrator into a lime stabilization tank (39) and from there into a sludge tank (40) or directly into the sludge tank or the wastewater together with the solid matter is conveyed e.g. to a peat filter situated in the fish farm area, and that the wastewater (28) is conveyed from the swirl concentrator into a drum screen (29), and if several swirl concentrators are used, the wastewater is first conveyed into a drum screen water supply chamber and from there further into a drum screen.

4. Method according to claim 1 for the purification of fish farming wastewater, **characterized in that** the screen is a rotary drum screen comprising a cylinder rotating about a horizontal axis and partially submerged in the water, the envelope of said cylinder functioning as a sieve, wherein the direction of flow of the fish farming wastewater may be either outwards or inwards relative to the cylinder, wherein the flushing of the screen takes place in the upper part of the device by pressurized water (42) either continuously or periodically under control based on pressure loss, in which drum screen the fish farming wastewater is strained through a perforated sieve surface (43) provided on the envelope of the drum rotating in the drum screen, particles larger than the sieve mesh size being thus separated, that the drum screen flushing water (45) is pumped through nozzles under pressure, that the amount of flushing water varies between 0.5 - 2.5 % of the amount of wastewater filtered, that the flushing water used may consist of water filtered through the drum screen, and that the flushed-off impurities (concentrated wastewater fraction) are gathered into a discharge flute (46), from where they are passed via a flushing water pumping station (33) into the flotation stage (35) or, if a sufficient pressure height is available, directly from the drum screen into flotation.

5. Method according to claim 4 for the purification of fish farming wastewater, **characterized in that** the sieve is a triangular sieve or a similar sieve whose sieve mesh size can be adjusted.

6. Method according to claim 1 for the purification of fish farming wastewater, **characterized in that**, depending on the required wastewater purification efficiency, two screens can be used in cascade, in which case the latter screen may have a sieve mesh size of 5 - 10 µm.

7. Method according to claim 2 for the purification of fish farming wastewater, **characterized in that** the fish farming wastewater fraction (32) coming from the drum screen, concentrated e.g. to 2 %, is conveyed into the flotation stage (35), where solid particles are separated from the liquid by flotation by means of gas bubbles produced in the liquid.

8. Method according to claim 1 for the purification of fish farming wastewater, **characterized in that** the flotation method is dissolved air flotation, wherein air is dissolved into water under pressure by injecting, and this air is released in the form of air bubbles when the water is restored to normal air pressure.

9. Method according to claim 1 or 7 for the purification of fish farming wastewater, **characterized in that** in the flotation stage the screen flushing water (concentrated wastewater fraction) (32) is passed from the flushing water pumping station (33) or directly from the drum screen into a flotation rapid mixing chamber (103), wherein chemicals are fed into the supply pipe to form flocs (102), from which rapid mixing chamber the wastewater is conveyed into a flocculation basin (104) provided with mixers, from which flocculation basins the wastewater is conveyed into a flotation clarification stage (106), wherein the water flows into the flotation clarification stage from the lower part of another flocculation basin through a rising cone, wherein a dispersion mixture (105) is fed into the water in the lower part of the cone, causing precipitated impurities to rise to the surface of the basin, wherein the sludge accumulating on the surface of the flotation clarification basin is removed into a sludge removal chute (107) either by means of surface skimmers (67) or via overflow by periodically raising the water level in the flotation tank by damming, from which sludge removal chute the sludge is conveyed further into a lime stabilization tank (39) and from there into a sludge tank (40) or directly into the sludge tank, and wherein the purified wastewater is passed under a partition wall located near the output end of the flotation clarification basin into a filtered water chute (58) and from there further either directly into a receiving watercourse (36) or into a drum screen or into a drum screen supply water chamber.

10. Method according to claim 1 for the purification of fish farming wastewater, **characterized in that** the swirl concentrator is disposed after the screen (29), in which case the fish farming wastewater (23) is first conveyed to a drum screen (29), from where the filtered wastewater (main water fraction) (31) is conveyed away e.g. into a receiving watersource, wherein the drum screen flushing water, i.e. concentrated wastewater (32) is conveyed into a swirl concentrator (25) and from there further into a flushing water pumping station (33) and into a flotation stage (35) or directly into the flotation stage for further purification, and wherein the sludge (26) recovered by the swirl concentrator (25) is conveyed via a lime stabilization tank (39) or directly into a sludge tank (40).

## Patentansprüche

1. Verfahren für die Reinigung von Abwasser, das bei der Fischzucht anfällt, worin das Reinigungsverfahren mindestens zwei Teilstufen der Reinigung umfasst: eine Siebreinigungs-Stufe und eine Flotations- oder Schwimmaufbereitungs-Stufe,
**dadurch gekennzeichnet, dass**:
- das bei der Fischzucht gebildete Abwasser zu der Siebreinigungs-Stufe transportiert wird, die ein oder mehrere (Filter- oder Gitter-)Siebe (43) aufweist, zu dem/denen das Abwasser geleitet wird und von dem/denen die filtrierte Abwasserfraktion (Haupt-Wasserfraktion) (31) und (44) weggeführt wird, beispielsweise in einen aufnehmenden Wasserlauf, und wo ein wesentlicher Anteil des festen Materials (Schlamms), der sich nicht in den Fischtanks und Sedimentationsteichen oder -becken abgesetzt hat, mit Hilfe des (Filter- oder Gitter-)Siebs rückgewonnen wird, und wo eine Aufkonzentrierung von festem Material (konzentrierter Abwasser-Fraktion) (45) durch (Filter- oder Gitter-)Siebreinigung erreicht wird,
- das feste Material (konzentrierte Abwasser-Fraktion) (45), das von dem (Filter- oder Gitter-)Sieb zurückgehalten wird, zu der Flotations- oder Schwimmaufbereitungsstufe geführt wird, wo feste Teilchen aus dem Abwasser mit Hilfe von in die Flüssigkeit eingebrachten Gasblasen und Chemikalien abgetrennt werden und wo das aufkonzentrierte Abwasser von festem Material, das in ihm verblieben ist, gereinigt wird.

2. Reinigungsverfahren nach Anspruch 1 für die Reinigung von Abwasser, das bei der Fischzucht anfällt,
**dadurch gekennzeichnet, dass** das Reinigungsverfahren neben der Flotation oder Schwimmaufbereitung zwei zusätzliche Teilstufen der Reinigung aufweist:
- eine Wirbelanreicherungs-Reinigungsstufe, umfassend einen oder mehrere Wirbelanreicherungsanlagen (25), mit deren Hilfe das bei der Fischzucht angefallene Abwasser durch Sedimentation (Klären) gereinigt wird, indem das Abwasser in tangentialer Richtung in ein Becken mit kreisförmigem horizontalem Querschnitt geleitet und durch ein zentrales Rohr und über die Ränder entfernt wird, worin sich die gröberen Feststoffe in einer zentralen Schlammgrube sammeln und von dort entweder in einem kontinuierlichen Strom oder periodisch entfernt werden,
- eine Siebreinigungs-Stufe, zu der das Abwasser, das von der Wirbelanreicherungs-Reinigungsstufe kommt, geleitet wird und die ein oder mehrere (Filter- oder Gitter-)Siebe (43) aufweist, zu denen das Abwasser geführt wird, von wo die filtrierte Abwasserfraktion (Hauptwasserfraktion) (44) weggeführt wird, beispielsweise in einen aufnehmenden Wasserlauf, und worin die Feststoffe (der Schlamm), die sich nicht in der Wirbelanreicherungsanlage absetzen, mit Hilfe des (Filter- oder Gitter-)Siebs wiedergewonnen werden, und worin eine Aufkonzentrierung von Schlamm (konzentrierte Abwasserfraktion) (45) mit Hilfe eines Trommelsiebs erreicht wird, oder
- die Wirbelanreicherungs-Stufe (25) nach dem (Filter- oder Gitter-)Sieb (29) angeordnet ist, in welchem Fall das bei der Fischzucht anfallende Abwasser (23) erst zu dem (Filter- oder Gitter-)Sieb (29) geführt wird, von wo das filtrierte Abwasser (Hauptwasserfraktion) (31) weggeführt wird, beispielsweise zu einem aufnehmenden Wasserlauf, und worin das das Sieb durchspülende Wasser, d.h. die konzentrierte Abwasserfraktion (32), zu der Wirbelanreicherungsanlage (25) geführt wird.

3. Verfahren nach Anspruch 1 zur Reinigung von Abwasser, das bei der Fischzucht anfällt, **dadurch gekennzeichnet, dass** das Fischzucht-Abwasser (23) erst in eine Wirbelanreicherungsanlage (25) geführt wird, wobei die Wirbelanreicherungsanlage zu einer von zwei Kategorien gehört: Zum Typ mit mittigem Auslass, wobei in derartigen Wirbelanreicherungsanlagen des Typs mit mittigem Auslass das Abwasser über einen im allgemeinen ringartigen zentralen Überströmrand (4) abgeleitet wird und in denen das bei der Fischzucht anfallende Abwasser durch ein getrenntes Ausbringungsrohr (6) aus der Wirbelanreicherungsanlage weg transportiert wird, und Wirbelanreicherungsanlagen vom Randableitungstyp, wobei in Wirbelanreicherungsanlagen vom Randableitungstyp das bei der Fischzucht anfallende Abwasser über die Ränder (4) des Beckens in ein Ableitungsrohr (6) abgeführt wird, und **dadurch**, dass die in der Wirbelanreicherungsanlage abgesetzten Feststoffe in dem Abwasser, das bei der Fischzucht anfällt, durch ein Schlammableitungsrohr (7) entfernt werden, das ausgehend vom Boden der Wirbelanreicherungsanlage in einen Kalkstabilisierungstank (39) und von dort in einen Schlammtank (40) oder direkt in den Schlammtank führt, oder worin das Abwasser zusammen mit den Feststoffen zu beispielsweise einem Torffilter geführt wird, der sich in dem Bereich der Fischzucht befindet, und dass das Abwasser (28) von der Wirbelanreicherungsanlage in ein Trommelsieb (29) geführt wird, und dann, wenn mehrere Wirbelanreicherungsanlagen eingesetzt werden, das Abwasser zuerst in eine Wasser-Zuführungskammer für ein Trommelsieb und von dort weiter in ein Trommelsieb transportiert wird.

4. Verfahren nach Anspruch 1 für die Reinigung von Abwasser, das bei der Fischzucht anfällt, **dadurch gekennzeichnet, dass** das (Filter- oder Gitter-)Sieb ein Drehtrommelsieb ist, welches einen Zylinder aufweist, der sich um eine horizontale Achse dreht und teilweise in das Wasser eingetaucht ist, wobei die Ummantelung des Zylinders als Sieb fungiert, worin die Strömung des beim Züchten der Fische anfallenden Wassers in Bezug auf den Zylinder entweder nach außen oder nach innen gerichtet sein kann, worin das Spülen des Siebs in dem oberen Teil der Vorrichtung durch unter Druck gesetztes Wasser (42) entweder kontinuierlich oder periodisch unter einer auf Druckverlust basierenden Steuerung erfolgt, wobei in diesem Trommelsieb das bei der Fischzucht anfallende Abwasser durch eine perforierte Sieboberfläche (43) geseiht wird, die auf dem Mantel der sich in dem Trommelsieb drehenden Trommel angeordnet ist, wodurch Teilchen, die größer als die Siebmaschengröße sind, abgetrennt werden, **dadurch**, dass das das Trommelsieb durchspülende Wasser (45) unter Druck durch Düsen gepumpt wird, dass die Menge an Spülwasser zwischen 0,5% und 2,5% der Menge des filtrierten Abwassers schwankt, dass das eingesetzte Spülwasser aus Wasser bestehen kann, das durch das Trommelsieb filtriert wurde, und dass die ausgespülten Verunreinigungen (konzentrierte Abwasserfraktion) in einer Auslassrinne (46) gesammelt werden, von wo sie über eine Spülwasser-Pumpstation (33) in die Flotations- oder Schwimmaufbereitungsstufe (35) oder, wenn eine ausreichende Druckhöhe verfügbar ist, direkt von dem Trommelsieb in die Flotation oder Schwimmaufbereitung geleitet werden.

5. Verfahren nach Anspruch 4 für die Reinigung von bei der Fischzucht anfallendem Abwasser, **dadurch gekennzeichnet, dass** das Sieb ein dreieckiges Sieb oder ein vergleichbares Sieb ist, dessen Siebmaschengröße eingestellt werden kann.

6. Verfahren nach Anspruch 1 für die Reinigung von bei der Fischzucht anfallendem Abwasser, **dadurch gekennzeichnet, dass** in Abhängigkeit von der erforderlichen Abwasserreinigungs-Effizienz zwei (Filter- oder Gitter-)Siebe in einer Kaskade verwendet werden können, in welchem Fall das hintere Sieb eine Siebmaschengröße von 5 bis 10 µm haben kann.

7. Verfahren nach Anspruch 2 für die Reinigung von bei der Fischzucht anfallendem Abwasser, **dadurch gekennzeichnet, dass** die Fischzucht-Abwasserfraktion (32), die von dem Trommelsieb kommt und beispielsweise auf 2% aufkonzentriert ist, in die Flotations- oder Schwimmaufbereitungs-Stufe (35) transportiert wird, wo FeststoffTeilchen mit Hilfe von in der Flüssigkeit erzeugten Gasblasen durch Flotation von der Flüssigkeit abgetrennt werden.

8. Verfahren nach Anspruch 1 für die Reinigung von bei der Fischzucht anfallendem Abwasser, **dadurch gekennzeichnet, dass** das Flotationsverfahren eine Flotation mit gelöster Luft ist, worin Luft durch Einspritzen in unter Druck gesetztes Wasser gelöst wird und diese Luft in Gestalt von Luftblasen freigesetzt wird, wenn in dem Wasser der normale Luftdruck wieder hergestellt wird.

9. Verfahren nach einem der Ansprüche 1 bis 7 für das Reinigen von bei der Fischzucht anfallendem Abwasser, **dadurch gekennzeichnet, dass** in der Flotations- oder Schwimmaufbereitungs-Stufe das Siebspülwasser (konzentrierte Abwasserfraktion) (32) von der Spülwasser-Pumpstation (33) oder direkt von dem Trommelsieb in eine Flotations-Schnellmischkammer (103) geführt wird, wobei Chemikalien in das Zuführungsrohr eingebracht werden, um Ausflockungen (102) zu bilden, und das Abwasser von dieser Schnellmischkammer in ein mit Mischern ausgestattetes Flockulationsbecken (104) geführt wird, von welchem Flockulationsbecken das Abwasser in eine Flotations- oder Schwimmaufbereitungs-Klärstufe (106) überführt wird, worin das Wasser von dem unteren Teil eines anderen Flockulationsbeckens durch einen aufsteigenden Konus in die Flotations- oder Schwimmaufbereitungs-Klärstufe fließt, wobei eine Dispersionsmischung (105) in das Wasser in dem unteren Teil des Konus eingebracht wird und bewirkt, dass präzipitierte Verunreinigungen an die Oberfläche des Beckens aufsteigen, worin der Schlamm, der sich an der Oberfläche des Flotations-Klärbeckens ansammelt, entweder mit Hilfe von Oberflächen-Abstreichern (67) oder durch Überströmen, indem der Wasserspiegel in dem Flotations-Tank durch Aufstauen periodisch angehoben wird, in eine Schlammentfernungsrinne abgeleitet wird, von welcher Schlammentfernungsrinne der Schlamm weiterhin in einen Kalkstabilisierungstank (39) und von dort in einen Schlammtank (40) oder direkt in den Schlammtank verbracht wird, und worin das gereinigte Abwasser unter einem Trennwall her, der sich nahe dem Auslassende des Flotations-Klärbeckens befindet, in eine Rinne (58) für filtriertes Wasser und von dort weiterhin entweder direkt in einen aufnehmenden Wasserlauf (36) oder in ein Trommelsieb oder in eine Versorgungswasserkammer eines Trommelsiebs geführt wird.

10. Verfahren nach Anspruch 1 für die Reinigung von bei der Fischzucht anfallendem Abwasser, **dadurch gekennzeichnet, dass** die Wirbelanreicherungsanlage hinter dem (Filter- oder Gitter-)Sieb (29) angeordnet ist, in welchem Fall das Fischzucht-Abwasser (23) zuerst zu einem Trommelsieb (29) geführt wird, von wo das filtrierte Abwasser (Hauptwasserfraktion) (31) weg, beispielsweise in einen aufnehmenden Wasserlauf, geführt wird, worin das Trommelsieb-Spülwasser, d.h. das konzentrierte Abwasser (32), für die weitere Reinigung in eine Wirbelanreicherungsanlage (25) und von dort weiterhin in eine Spülwasser-Pumpstation (33) und in eine Flotations- oder Schwimmaufbereitungs-Stufe (35) oder direkt in die Flotations- oder Schwimmaufbereitungs-Stufe verbracht wird, und worin der Schlamm (26), der durch die Wirbelanreicherungsanlage (25) rückgewonnen wird, über einen Kalkstabilisierungstank (39) oder direkt in einen Schlammtank (40) verbracht wird.

## Revendications

1. Procédé d'épuration des eaux usées produites en pisciculture, dans lequel le procédé d'épuration comprend au moins deux sous étages d'épuration : les étages d'épuration par tamis et par flottation,
**caractérisé en ce que** :
les eaux usées produites en pisciculture sont transportées vers un étage d'épuration par tamis, qui comprend un ou plusieurs tamis (43) dans lesquels les eaux usées passent, à partir desquels la fraction des eaux usées filtrées (fraction d'eaux principale) (31) et (44) est transportée à distance, par exemple dans un cours d'eau de réception et où une proportion substantielle de matière solide (boue) qui n'a pas été déposée dans les viviers et les bassins de sédimentation, est récupérée au moyen du tamis, et où une concentration de matière solide (fraction d'eaux usées concentrée) (45) est obtenue par épuration par tamis,
la matière solide (fraction d'eaux usées concentrée) (45) prise sur le tamis passe à l'étage de flottation, dans lequel les particules solides sont séparées des eaux usées au moyen de bulles de gaz et de produits chimiques introduits dans le liquide, et dans lequel les eaux usées concentrées sont débarrassées des matières solides résiduelles.

2. Procédé d'épuration selon la revendication 1, pour l'épuration des eaux usées produites en pisciculture,
**caractérisé en ce que**, outre la flottation, le procédé d'épuration comprend deux étages supplémentaires d'épuration :
- un étage d'épuration par concentrateur à tourbillon, comprenant un ou plusieurs concentrateurs à tourbillon (25) au moyen desquels les eaux usées produites en pisciculture sont épurées par sédimentation (clarification), en amenant les eaux usées dans un bassin de section transversale horizontale circulaire dans une direction tangentielle et en les retirant par un tuyau central et sur les bords, dans lequel les matières solides les plus grossières se collectent dans un puits de boue central et sont retirées de là soit selon un écoulement continu soit de manière périodique,
- un étage d'épuration par tamis, vers lequel les eaux usées provenant de l'étage d'épuration par concentrateur à tourbillon sont transportées et qui comprend un ou plusieurs tamis (43) vers lesquels les eaux usées sont transportées, à partir de là la fraction d'eaux usées filtrée (fraction principale d'eaux) (44) est transportée à distance par exemple dans un cours d'eau de réception et où la matière solide (boue) non déposée dans le concentrateur à tourbillon est récupérée au moyen du tamis, et où une concentration de boue (fraction d'eaux usées concentrée) (45) est obtenue au moyen d'un tamis à tambour, ou
- l'étage de concentrateur à tourbillon (25) est disposé après le tamis (29), auquel cas les eaux usées (23) de pisciculture sont tout d'abord transportées vers le tamis (29), à partir de là les eaux usées filtrées (fraction d'eaux principale) (31) sont transportées à distance par exemple vers un cours d'eau de réception, et où l'eau de rinçage de tamis, c'est-à-dire la fraction d'eaux usées concentrée (32) est transportée vers le concentrateur à tourbillon (25).

3. Procédé selon la revendication 1 pour l'épuration des eaux usées de pisciculture, **caractérisé en ce que** les eaux usées de pisciculture (23) sont tout d'abord transportées dans un concentrateur à tourbillon (25), ledit concentrateur à tourbillon appartenant à l'une de deux catégories : le type à décharge centrale, dans lesquels concentrateurs à tourbillon de type à décharge centrale, les eaux usées sont retirées du concentrateur sur un bord de trop-plein central (4) généralement de forme annulaire, et dans lequel les eaux usées de pisciculture sont transportées du concentrateur à tourbillon par l'intermédiaire d'un tuyau de décharge séparé (6), et les concentrateurs à tourbillon de type à décharge par le bord, dans lesquels concentrateurs à tourbillon de type à décharge par le bord, les eaux usées de pisciculture sont retirées sur les bords (4) du bassin dans un tuyau de décharge (6), et **en ce que** la matière solide dans les eaux usées de pisciculture déposée dans le concentrateur à tourbillon est retirée par un tuyau de décharge de boue (7) à partir du fond du concentrateur à tourbillon vers un réservoir de stabilisation à chaux (39) et à partir de là dans un réservoir de boue (40) ou directement dans le réservoir de boue, ou les eaux usées ensemble avec la matière solide sont transportées par exemple vers un filtre à tourbe situé dans la zone de pisciculture et **en ce que** les eaux usées (28) sont transportées du concentrateur à tourbillon dans un tamis à tambour (29), et si l'on utilise plusieurs concentrateurs à tourbillon, les eaux usées sont tout d'abord transportées dans une chambre d'approvisionnement en eau de tamis à tambour et à partir de là ensuite dans un tamis à tambour.

4. Procédé selon la revendication 1 pour l'épuration des eaux usées de pisciculture, **caractérisé en ce que** le tamis est un tamis à tabour rotatif comprenant un cylindre tournant autour d'un axe longitudinal et fractionllement immergé dans l'eau, l'enveloppe dudit cylindre fonctionnant comme un tamis, dans lequel la direction de l'écoulement des eaux usées de pisciculture peut être soit vers l'extérieur soit vers l'intérieur par rapport au cylindre, dans lequel le rinçage du tamis a lieu dans la fraction supérieure du dispositif, en mettant de l'eau (42) sous pression de manière soit continue soit périodique sous contrôle en fonction de la perte de pression, dans lequel tamis à tambour, les eaux usées de pisciculture sont filtrées à travers une surface de tamis perforée (43) prévue sur l'enveloppe du tambour tournant dans le tamis à tambour, les particules supérieures à la taille de maille du tamis étant ainsi séparées, de sorte que l'eau de rinçage du tamis rotatif (45) est pompée par l'intermédiaire de buses sous pression, que la quantité d'eau de rinçage varie entre 0,5 et 2,5 % de la quantité d'eaux usées filtrée, que l'eau de rinçage utilisée peut se composer de l'eau filtrée par le tamis à tambour, et que les impuretés rejetées (fraction d'eaux usées concentrée) sont collectées dans un collecteur de décharge (46) d'où elles passent via une station de pompage d'eau de rinçage (33) à l'étage de flottation (35) ou, si une hauteur de pression suffisante est disponible, directement du tamis à tambour à l'étage de flottation.

5. Procédé selon la revendication 4 pour l'épuration des eaux usées de pisciculture, **caractérisé en ce que** le tamis est un tamis triangulaire ou un tamis similaire dont la taille de maille du tamis peut être ajustée.

6. Procédé selon la revendication 1 pour l'épuration des eaux usées de pisciculture, **caractérisé en ce qu'**en fonction de l'efficacité d'épuration requise des eaux usées, on peut utiliser deux tamis en cascade, auquel cas le dernier tamis peut avoir une taille de maille de 5 à 10 µm.

7. Procédé selon la revendication 2 pour l'épuration des eaux usées de pisciculture, **caractérisé en ce que** la fraction d'eaux usées de pisciculture (32) provenant du tamis à tambour, concentrée par exemple à 2 %, est transportée à l'étage de flottation (35), où les particules solides sont séparées du liquide par flottation au moyen de bulles de gaz produites dans le liquide.

8. Procédé selon la revendication 1 pour l'épuration des eaux usées de pisciculture, **caractérisé en ce que** le procédé de flottation est une flottation à air dissous, dans lequel l'air est dissous dans l'eau sous pression par injection, et cet air est libéré sous la forme de bulles d'air lorsque l'eau est ramenée à la pression d'air normale.

9. Procédé selon la revendication 1 ou 7 pour l'épuration des eaux usées de pisciculture, **caractérisé en ce qu'**au étage de flottation, l'eau de rinçage de tamis (fraction d'eaux usées concentrée) (32) passe de la station de pompage d'eau de rinçage (33) ou directement du tamis à tambour dans une chambre de mélange rapide de flottation (103), dans lequel des produits chimiques sont alimentés dans le tuyau d'alimentation pour former des flocons (102), à partir de laquelle chambre de mélange rapide, les eaux usées sont transportées dans un bassin de floculation (104) doté de mélangeurs, à partir desquels bassins de floculation, les eaux usées sont transportées dans un étage de clarification par flottation (106), dans lequel l'eau s'écoule dans l'étage de clarification par flottation à partir de la fraction inférieure d'un autre bassin de floculation par l'intermédiaire d'un cône d'élévation, dans lequel un mélange de dispersion (105) est alimenté dans l'eau dans la fraction inférieure du cône, provoquant la remontée des impuretés précipitées à la surface du bassin, dans lequel la boue qui s'accumule sur la surface du bassin de clarification par flottation est retirée dans une goulotte de retrait de boue (107) soit au moyen d'écrémeurs de surface (67) soit via le trop-plein en faisant monter périodiquement le niveau de l'eau dans le réservoir de flottation par endiguement, à partir de laquelle goulotte de retrait de boue, la boue est ensuite transportée dans un réservoir de stabilisation à chaux (39) et à partir de là, dans un réservoir de boue (40) ou directement dans le réservoir de boue, et dans lequel les eaux usées purifiées passent sous une paroi de séparation située à proximité de l'extrémité de sortie du bassin de clarification par flottation dans une goulotte d'eau filtrée (58) et à partir de là ensuite, soit directement dans un cours d'eau de réception (36) soit dans un tamis à tambour ou dans une chambre d'eau d'alimentation de tamis à tambour.

10. Procédé selon la revendication 1 pour l'épuration des eaux usées de pisciculture, **caractérisé en ce que** le concentrateur à tourbillon est disposé après le tamis (29), auquel cas les eaux usées de pisciculture (23) sont d'abord transportées jusqu'à un tamis à tambour (29), à partir de là les eaux usées filtrées (fraction d'eaux principale) (31) sont transportées à distance, par exemple dans une source d'eau de réception, dans lequel l'eau de rinçage du tamis à tambour, c'est-à-dire les eaux usées concentrées (32) sont transportées dans un concentrateur à tourbillon (25) et à partir de là, encore dans une station de pompage d'eau de rinçage (33) et dans un étage de flottation (35) ou directement dans l'étage de flottation pour une épuration supplémentaire, et dans lequel la boue (26) récupérée par le concentrateur à tourbillon (25) est transportée via un réservoir de stabilisation à chaux (39) ou directement dans un réservoir de boue (40).
